# EUROPEAN PATENT APPLICATION

(11) **EP 1 923 779 A2**
(43) Date of publication of application: **21.05.2008**
(21) Application number: 07112569.4
(22) Date of filing: 16.07.2007
(51) Int. Cl.: G06F 3/048, H04N 5/445

(54) **Remote control device, character input method and display device using soft keyboard**

(30) Priority: 17.11.2006 KR 20060114004
(71) Applicant: Samsung Electronics Co., Ltd., Suwon-si, Gyeonggi-Do 442-742 (KR)
(72) Inventor: Kwak, Han-tak, Gyeonggi-do (KR)
(74) Representative: Davies, Robert Ean

(57) **Abstract**

A remote control device, a character input method and a display device using a soft keyboard are provided. A display unit (365) displays a soft keyboard having a plurality of character buttons, each of which bears at least two characters to input the characters. Also, a user manipulation unit (120) selects a target button among the plurality of character buttons displayed on the display unit. In addition, a control unit (130) makes the target character selectable by alternately activating the at least two characters positioned on the target button if the target button is selected.

## Description

Apparatuses and methods consistent with the present invention relate to a remote control device, a character input method and a display device using a soft keyboard, and more particularly, but not exclusively, to a remote control device, a character input method and a display device using a soft keyboard which has a plurality of character buttons, each of which displays at least two characters; a plurality of function buttons; and a character confirmation window for confirming characters inputted through the function buttons and character buttons.

A soft keyboard is an image keyboard having the same key arrangements as a general hardware keyboard having keys of consonants, vowels, and the alphabet, and is displayed on a display device for a user's convenience in inputting the keys. In particular, if a soft keyboard is displayed on a display device, a user selects and inputs desired characters, numerals, and so forth, using a user input device such as a remote controller.

However, a related art soft keyboard uses the same keyboard arrangement as a keyboard connected to a computer, and thus has a large number of buttons (i.e., keys). Accordingly, the related art soft keyboard occupies a large space of the display device. To select characters using the remote control device, keys constituting the corresponding characters on the keyboard are apart from one another, and thus a user is inconvenienced by manipulating direction keys to search for desired characters and/or select the searched characters.

In particular, if the soft keyboard displayed on the display device is apart from a display window in which the characters selected through the soft keyboard are displayed, the user must move his eyes to confirm the characters displayed in the display window, which also causes inconvenience to the user. The user is also inconvenienced when he uses a touch screen type soft keyboard in addition to the remote control device.

Exemplary embodiments of the present invention overcome the above disadvantages and other disadvantages not described above. Also, the present invention is not required to overcome the disadvantages described above, and an exemplary embodiment of the present invention may not overcome any of the problems described above.

Exemplary embodiments of the present invention provide a remote control device, a character input method and a display device using a soft keyboard, which address the problem that the soft keyboard having the same key arrangements as a hardware keyboard occupies a large area of a display screen, enable a user to easily confirm the character inputted through the soft keyboard, and reduce the frequency of button manipulations.

According to the present invention there is provided an apparatus and method as set forth in the appended claims. Other features of the invention will be apparent from the dependent claims, and the description which follows.

According to an aspect of the present invention, there is provided a remote control device using a soft keyboard, comprising a display unit which displays the soft keyboard having a plurality of character buttons, each of which displays at least two characters to input the characters; a user manipulation unit which selects a target button among the plurality of character buttons displayed on the display unit; and a control unit which causes the target character to be selectable by alternately activating the at least two characters positioned on the target button if the target button is selected.

The soft keyboard may further comprise a character confirmation window which displays an input state of characters inputted through the plurality of character buttons, wherein if the target character is selected through the user manipulation unit, the control unit displays the selected target character in the character confirmation window.

The control unit may alternately activate the at least two characters displayed on the target button if a time for which the target button is selected elapses.

The user manipulation unit may select the target character by re-selecting the target button if the target character is activated.

The soft keyboard may further comprise a mode button which selects one of a first mode for inputting a first language, a second mode for inputting a second language, and a numeral mode for inputting a numeral.

The first mode may be a mode for inputting Korean language characters, the second mode may be a mode for inputting English language characters, and the plurality of character buttons may include buttons for inputting Korean language characters, English language characters, and numerals.

The soft keyboard may further comprise a toggle button which displays one of a capital letter and a small letter on the character button if the second mode is selected by the mode button.

The soft keyboard may further comprise symbol buttons which input a plurality of special characters, wherein if a symbol button is selected, the control unit displays the plurality of special characters as a popup menu or on the soft keyboard.

According to another aspect of the present invention, there is provided a character input method using a soft keyboard, which comprises displaying the soft keyboard having a plurality of character buttons, each of which displays at least two characters to input the characters; selecting a target button on which a desired target character among the plurality of character buttons being displayed is displayed; and making the target character selectable by alternately activating the at least two characters which include the target characters.

The soft keyboard may further comprise a character confirmation window which displays an input state of the characters inputted through the plurality of character buttons, and the character input method further comprises displaying the selected target character in the character confirmation window.

Activating and displaying the target character may comprise alternately activating the at least two characters displayed on the target button based on a time for which the target button is selected.

The target button and the target character may be selected by at least one of a touchpad, a mouse, and a remote control device.

According to another aspect of the present invention, there is provided a display device using a soft keyboard, which comprises a user interface (UI) generation unit which generates the soft keyboard having a plurality of character buttons, each of which displays at least two characters to input the characters; a signal processing unit which processes a video signal from a signal source or the soft keyboard; a display unit which displays the video signal outputted from the signal processing unit or the soft keyboard; a signal receiving unit which receives a signal which selects a target button from the plurality of character buttons of the soft keyboard displayed on the display unit; and a control unit which causes the target character to be selectable by alternately activating the at least two characters positioned on the target button if the signal which selects the target button is received through the signal receiving unit.

The signal receiving unit may receive the signal from at least one of a remote control device, a main body key input pad, a touchpad, and a mouse.

For a better understanding of the invention, and to show how embodiments of the same may be carried into effect, reference will now be made, by way of example, to the accompanying diagrammatic drawings in which:
FIG. 1 is a block diagram schematically illustrating the construction of a remote control device using a soft keyboard according to the first exemplary embodiment of the present invention;
FIG. 2 is a flowchart illustrating a character input method using a soft keyboard as illustrated in FIG. 1;
FIG. 3 is a block diagram schematically illustrating the construction of a display device using a soft keyboard according to the second exemplary embodiment of the present invention;
FIGS. 4A to 4C are views illustrating examples of the soft keyboard generated by the UI generation unit of FIG. 3 according to the first exemplary embodiment of the present invention;
FIG. 5 is a view explaining a process of alternately activating a plurality of characters positioned on a target button of the soft keyboard;
FIG. 6 is a view explaining a process of inputting Korean language characters using a screen keyboard as shown in FIG. 4A;
FIGS. 7A and 7B are views illustrating examples of the soft keyboard generated by the UI generation unit of FIG. 3 according to the second exemplary embodiment of the present invention; and
FIG. 8 is a flowchart illustrating a character input method using a soft keyboard as illustrated in FIG. 3.

Throughout the drawings, like reference numerals will be understood to refer to like parts, components and structures.

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

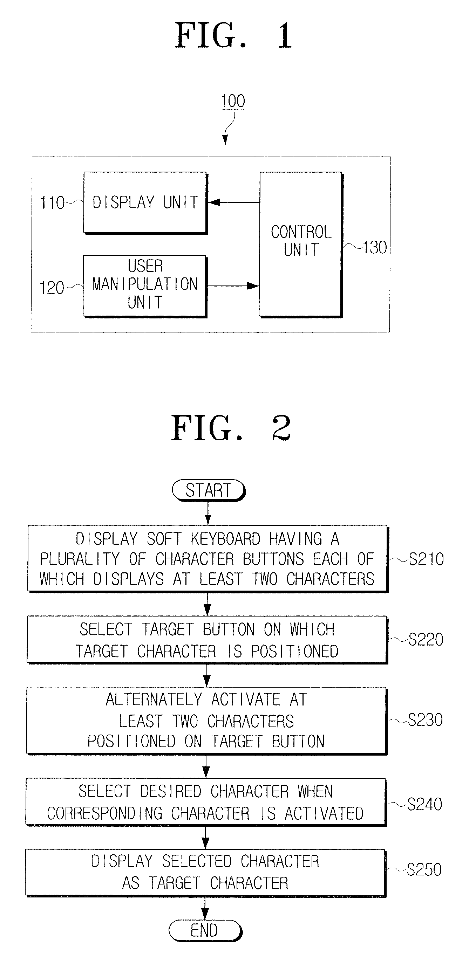

FIG. 1 is a block diagram schematically illustrating the construction of a remote control device using a soft keyboard according to the first exemplary embodiment of the present invention.

Referring to FIG. 1, the remote control device 100 using a soft keyboard comprises a display unit 110, a user manipulation unit 120, and a control unit 130.

The display unit 110 displays the soft keyboard having a plurality of function buttons, and a plurality of character buttons, each of which displays at least two characters to input the characters.

The user manipulation unit 120 is a user interface for enabling a user to request, set, or change functions supported by the remote control device 100. The user manipulation unit 120 may be implemented by a touchpad which selects a target character and a target button, a plurality of physical buttons, or keys. In the case of implementing the user manipulation unit 120 by the touchpad, the soft keyboard displayed on the display unit 110 is displayed in the form of a touch screen.

In the case of inputting characters using the soft keyboard displayed on the display unit 110, the user selects a target button on which a desired target character is positioned among a plurality of character buttons displayed on the display unit 110.

If the target button is selected, at least two characters positioned on the target button are alternately activated. The user selects the target character by re-selecting the target button when the desired character is activated.

If the target button is selected through the user manipulation unit 120, the control unit 130 controls the display unit 110 to display at least two characters which are alternately activated on the target button. The at least two characters are alternately activated to make the target character selectable. The control unit 130 recognizes the character selected through the user manipulation unit 120 when one of the at least two alternately activated characters is activated as the target character, and controls the display unit 110 to display the recognized target character.

FIG. 2 is a flowchart illustrating a character input method using a soft keyboard as illustrated in FIG. 1.

Referring to FIGS. 1 and 2, a soft keyboard is displayed on the display unit 110 according to a user's request (S210). The soft keyboard has a plurality of character buttons, each of which displays at least two characters, to input the characters. The selection of the characters displayed on the respective character buttons is performed by the manipulation of a key, such as a direction key, provided in the user manipulation unit 120.

After operation S210, if a target button on which a target character is positioned among a plurality of character buttons displayed on the display unit is selected through the user manipulation unit 120 (S220), the control unit 130 controls the display unit 110 to display at least two characters, which include the target character and are alternately activated, on the target button (S230).

If the target button is selected again when one of the at least two characters positioned on the target button is activated (S240), the control unit 130 recognizes the character selected during its activation as the target character, and controls the display unit 110 to display the selected target character in a specified area of the screen keyboard (S250).

In the first exemplary embodiment of the present invention, at least two characters are displayed on each of the respective character buttons of the soft keyboard. For example, if the input mode is a Korean language mode and two characters are displayed on one character button, " 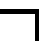 " and " 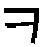 " are displayed on one character button, and " 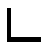 " and " 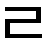 " are displayed on another character button. If the first character button is initially selected, " 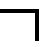 " and " 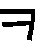 " are alternately activated and displayed under the control of the control unit 130, without any additional manipulation of the user manipulation unit 120.

By contrast, if the input mode is an English language input mode, "a" and "b" are displayed on one character button, and "c" and "d" are displayed on another character button. As a result, the soft keyboard has fewer buttons than the related art soft keyboard, and the frequency of movement is minimized when the user inputs a desired character.

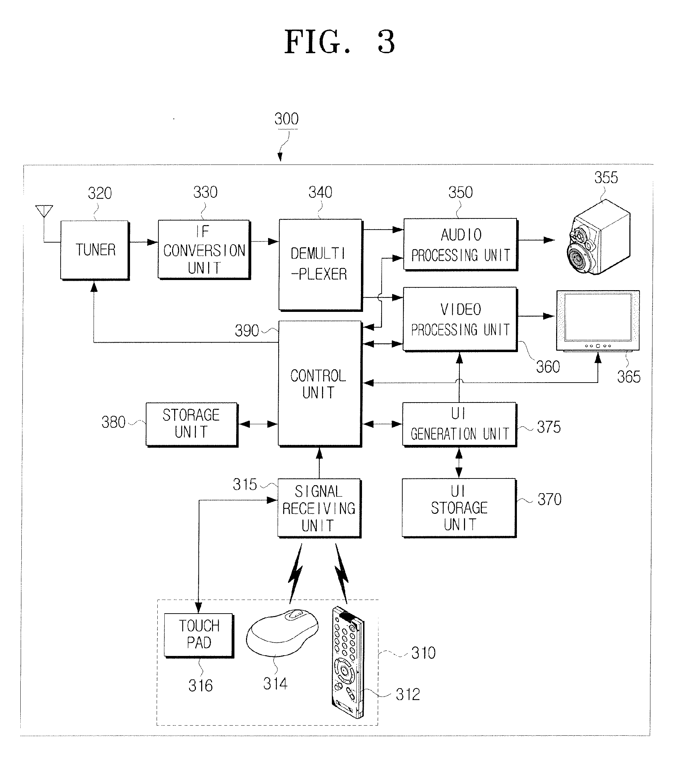

FIG. 3 is a block diagram schematically illustrating the construction of a display device using a soft keyboard according to the second exemplary embodiment of the present invention.

Referring to FIG. 3, the display device 300 using a soft keyboard comprises a user manipulation unit 310, a signal receiving unit 315, a tuner 320, an intermediate frequency (IF) conversion unit 330, a demultiplexer 340, an audio processing unit 350, a speaker 355, a video processing unit 360, a display unit 365, a user interface (UI) storage unit 370, a UI generation unit 375, a storage unit 380, and a control unit 390.

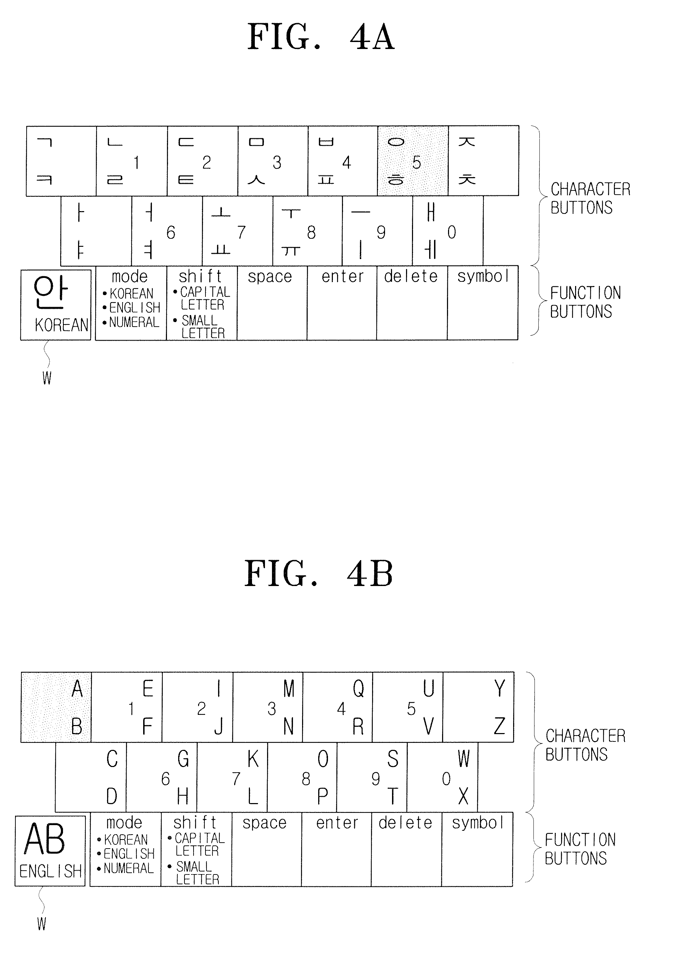

The user manipulation unit 310 is a user interface for enabling a user to request, set, or change functions supported by the display device 300, and is provided with a plurality of buttons, numeral keys, direction keys, function keys, and shortcut keys. For example, a user changes a channel or adjusts the volume by manipulating the user manipulation unit 310. In addition, the user manipulates the user manipulation unit 310 to output a user manipulation signal for requesting the display of a screen keyboard, as shown in FIG. 4A. The features of the screen keyboard will be described later.

The user manipulation unit 310 may be implemented by a remote controller 312 for outputting an infrared signal, a wireless mouse 314, a touchpad 316, or an optical mouse (not illustrated), or may be provided in the main body of the display device 300. If the user interface such as the remote controller 312 or the wireless mouse 314 is not provided with the display device 300, the user can use the screen keyboard by using the touchpad 316 supported by the display device 300, or the buttons provided in the main body.

When a key provided in the remote controller 312 is selected, the remote controller 312 transmits an infrared signal set for the corresponding key. The wireless mouse 314 transmits a user manipulation signal using a radio signal or an infrared signal. The optical mouse (not illustrated) transmits the user manipulation signal using light.

The touchpad 316 senses whether the soft keyboard displayed on the display unit 365 is touched, generates an electric signal corresponding to the position at which the touch has been sensed, and converts the generated electric signal into a digital signal. For example, the touchpad 316 is implemented using specially processed ITO glass or ITO file in order to sense the user's touch signal. It is preferable that the touchpad 316 is provided in the display unit 365, and in this exemplary embodiment of the present invention, it is illustrated as a block in the user manipulation unit 310 for convenience of explanation.

The signal receiving unit 315 receives the user manipulation signal, such as an infrared signal, a frequency signal, or an optical signal, transmitted from the user manipulation unit 310, and outputs the received signal to the control unit 390.

The tuner 320 selects a channel previously selected by a selection control signal of the control unit 390 among multi-channel broadcasting signals received through an antenna.

The IF conversion unit 330 converts the broadcasting signal of the selected channel into an IF signal.

The demultiplexer 340 separates the IF broadcasting signal into an audio signal and a video signal. The demultiplexer 340 outputs the separated audio signal and video signal to the audio processing unit 350 and the video processing unit 360, respectively.

The audio processing unit 350 decompresses the audio signal inputted from the demultiplexer 340 by decoding the audio signal. The audio processing unit 350 processes the decoded audio signal to produce an audible signal, and amplifies the audio signal to provide the amplified audio signal to the speaker 355. The speaker 355 outputs the amplified audio signal.

The video processing unit 360 decompresses the video signal inputted from the demultiplexer 340 by decoding the video signal. The video processing unit 360 improves the picture quality of the decoded video signal, and converts the video signal into a visible signal through a scaling process. In addition, the video processing unit 360 combines a UI window generated by the UI generation unit 375 with the video signal, and outputs the combined video signal to the display unit 365. The UI window may be a display window (not illustrated) for integrating and displaying the screen keyboard shown in FIG. 4A, and characters inputted through the screen keyboard.

The display unit 365 comprises a display panel, such as a liquid crystal display (LCD), a cathode ray tube (CRT), or a plasma display panel (PDP), and displays the video signal outputted from the video processing unit 360. In the case of a touch screen type screen keyboard, the user manipulates the soft keyboard displayed on the display unit 365 by touching the soft keyboard.

The UI storage unit 370 stores a program required for UI generation, text data, image data, and characters of different languages to be displayed when the soft keyboard is generated.

The UI generation unit 375 generates diverse menus under the control of the control unit 390 if generation of the UI, which is required to set and confirm the functions provided from the display device 300, is requested through the user manipulation unit 310. Also, if a signal for requesting display of the screen keyboard is outputted through the user manipulation unit 310, the UI generation unit 375 generates the screen keyboard shown in FIG, 4A under the control of the control unit 390. In this case, the UI generation unit 375 generates diverse menu setting windows (not illustrated), or the screen keyboard, using a program stored in the UI storage unit 370.

At least two languages can be inputted into the soft keyboard of exemplary embodiments of the present invention. For example, if the soft keyboard supports two languages, it includes a mode button which selects one of a first mode for inputting a first language, a second mode for inputting a second language, and a numeral mode for inputting numerals. Hereinafter, it is exemplified that the soft keyboard supports the input of two languages, and the first and second modes are a Korean language input mode and an English language input mode, respectively. A mode for inputting different languages is selected by a mode selection button to be described later.

The storage unit 380 comprises a nonvolatile memory for storing various kinds of control programs required to implement the function of the display device 300, such as a booting program or a system end program, and a volatile memory for storing the program which is loaded from the nonvolatile memory to be executed by the control unit 390, or storing data processed by the control unit 390.

The control unit 390 performs the character input method according to exemplary embodiments of the present invention using the programs stored in the storage unit 380. In particular, if the display of the screen keyboard is requested from the user manipulation unit 310, the control unit 390 controls the UI generation unit 375 to generate the screen keyboard shown in FIG. 4A. Then, the control unit 390 controls the video processing unit 360 to overlap the screen keyboard generated by the UI generation unit 375 with the video signal being processed through the video processing unit 360, and outputs the overlapped video signal to the display unit 365.

In addition, the control unit 390 controls the UI generation unit 375 to display a target character selected through the screen keyboard by the manipulation of the user manipulation unit 310 on a character confirmation window W to be described later.

Hereinafter, the screen keyboard according to exemplary embodiments of the present invention will be described in detail with reference to FIGS. 4A to 4C.

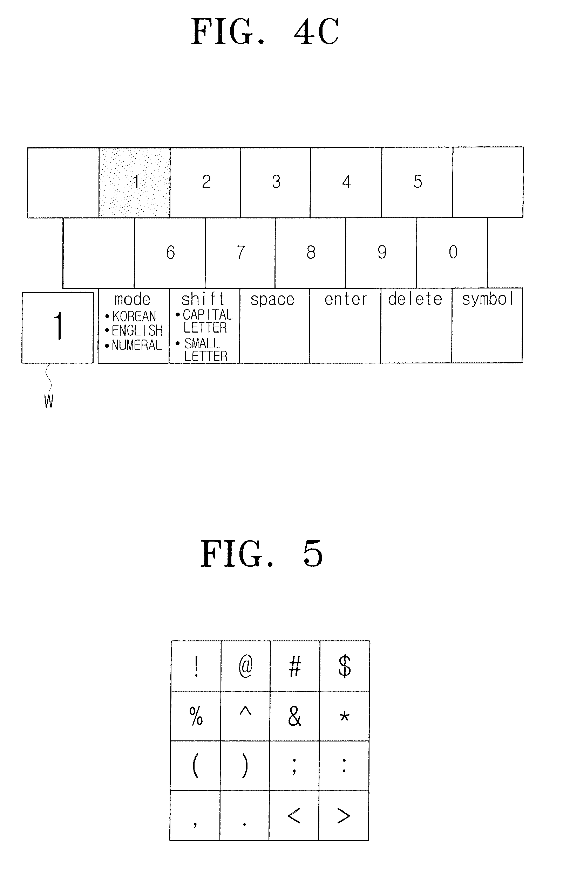

FIG. 4A is a view illustrating an example of a screen keyboard for inputting Korean language characters that is provided on the screen keyboard displayed on the display unit, FIG. 4B is a view illustrating an example of a screen keyboard for inputting English characters, and FIG. 4C is a view illustrating an example of a screen keyboard for inputting numerals.

Referring to FIG. 4A, if the display of the screen keyboard is requested through the user manipulation unit 310, the UI generation unit 375 generates the screen keyboard through which Korean language characters can be inputted. This is because the Korean language input mode has been set as a default value. However, this default value can be changed by the user.

The screen keyboard according to an exemplary embodiment of the present invention has a plurality of character buttons, a plurality of function buttons, and a character confirmation window W.

Each of the character buttons displays at least two characters in order to input the desired characters with a small number of buttons. The character buttons are for inputting Korean language characters, English language characters, and numerals. If the Korean language input mode is selected, the respective character buttons display consonants and vowels, and if the English language input mode is selected, the respective character buttons display letters of the alphabet. If the numeral input mode is selected, the respective character buttons display numerals from "0" to "9".

Specifically, if the current input mode is the Korean language input mode, each of the character buttons displays at least two consonants or at least two vowels. In this case, the consonants or the vowels displayed on each of the respective character buttons are correlated with each other.

For example, if two consonants are displayed on one character button, the soft keyboard is designed so that pairs of consonants having similar appearances, such as " 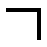 " and " 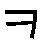 " " 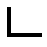 " and " 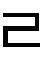 ", " 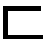 " and " 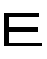 ", " 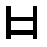 " and " 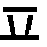 ", " 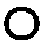 " and " 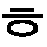 ", and " 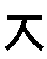 " and " 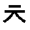 ", and the remaining pair of consonants " 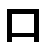 " and " 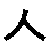 " are displayed on the same respective character buttons. In the same manner, if two vowels are displayed on one character button, the soft keyboard is designed so that pairs of vowels having similar appearances, such as " 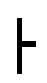 " and " 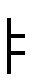 ", "┤" " and " 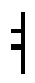 " " 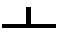 " and " 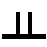 " " 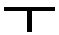 " and " 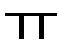 ", and "-" and "|", and the remaining pair of vowels " 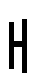 " and " 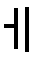 " " are displayed on the same respective character buttons.

If the current input mode is the English language input mode, the UI generation unit 375 displays at least two letters of the alphabet in order on each character button, as shown in FIG. 4B. Here the letters have no correlation with each other. Accordingly, "A" and "B" are displayed in order on the first character button, and "C" and "D" are displayed in order on the second character button. Since the characters displayed on the respective character buttons are as illustrated in the drawings, the explanation of other character buttons will be omitted.

On the other hand, if the current input mode is the numeral input mode, the UI generation unit 375 displays one numeral from "0" to "9" on each of 10 buttons, as shown in FIG. 4C, or displays two numerals on each of five buttons.

The function buttons include a mode selection button "mode", a shift button "shift", a space button "space", an enter button "enter", a delete button "delete", and a symbol button "symbol".

The mode selection button "mode" is a button which selects one of the first mode, the second mode, and the numeral input mode. If the first mode is the Korean language input mode and the second mode is the English language input mode, the mode selection button selects one of the Korean language input mode, the English language input mode, and the numeral input mode.

If the user requests the display of the screen keyboard through the user manipulation unit 310, Korean language characters are displayed on the screen keyboard shown in FIG. 4A, since the Korean language input mode is set as the default value.

If the mode selection button is selected again through the user manipulation unit 310, the current mode is changed to the English language input mode, and the UI generation unit 375 generates the screen keyboard shown in FIG. 4B.

Then, if the mode selection switch is selected again through the user manipulation unit 310, the current mode is changed to the numeral input mode, and the UI generation unit 375 generates the screen keyboard shown in FIG. 4C.

The shift button "shift" is a toggle button which displays one of capital and small letters on each character button if the current mode is the English language input mode. Whenever the user selects the shift button through the user manipulation unit 310, the capital and small alphabet letters are alternately displayed.

For example, if the user first selects the mode selection button through the user manipulation unit 310, the UI generation unit 375 generates the screen keyboard on which capital letters are displayed, as shown in FIG. 4B. If the shift button is then selected, the UI generation unit 375 generates the screen keyboard on which small letters, which have been shifted from the capital letters, are displayed.

The space button "space" is used when the user intends to insert a space between characters.

The enter button "enter" is used when the user intends to change the line on which characters are inputted after the characters inputted by the user are displayed on the display window (not illustrated) of the display unit 365.

The delete button "delete" is used when the user intends to delete the target character after the target character is displayed in the character confirmation window W to be described later. For example, if the user has inputted " 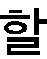 " in the character confirmation window W by mistake although he intended to input " 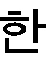 ", he deletes " 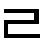 " from " 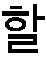 " by selecting the delete button, and then inputs the target character " 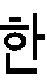 " by re-selecting " 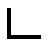 ".

The symbol button "symbol" is a button for inputting symbols and special characters shown in FIG. 5. If the symbol button is selected, the UI generation unit 375 generates the UI shown in FIG. 5, and the control unit 390 controls the display unit 365 to display the generated UI around the symbol button as a popup menu. Alternatively, if the symbol button is selected, the UI generation unit 375 may generate a new screen keyboard in which the UI shown in FIG. 5 is extended to the screen keyboard shown in FIG. 4A. The symbols as shown in FIG. 5 are exemplary, and the number of symbols can be extended.

The character confirmation window W is a window which displays the target character, and displays the input state of the characters selected through a plurality of character buttons and function buttons in the order of their selection. The character confirmation window W is included in the screen keyboard, and thus the user can easily confirm the currently inputted character without greatly moving his eyes. Also, since the current input mode is displayed in the character confirmation window W along with the inputted characters, the user can easily confirm the current input mode. For the screen keyboard shown in FIG. 4A, an indication such as " 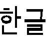 " (that is, Korean language) may be displayed in the character confirmation window W, and thus the user can recognize that the currently selected mode is the Korean language input mode.

Hereinafter, a method of inputting a target character using the screen keyboard shown in FIGS. 4A and 4B according to exemplary embodiments of the present invention will be described.

First, if the target button is selected, at least two characters being displayed on the target button are alternately activated in an automatic activation mode. If the target button is first selected, the control unit 390 controls the UI generation unit 375 to generate the screen keyboard in which characters are alternately activated for a predetermined time period *t*. In this case, the activated character is displayed on the selected target button, and the period during which one character is activated can be changed. The target button is a character button on which the input character desired by the user is positioned, and the target character is a character of which the input is desired.

The control unit 390 recognizes the character selected when one of the at least two characters on the target button is activated, and controls the UI generation unit 375 to display the selected character in the character confirmation window W of the soft keyboard.

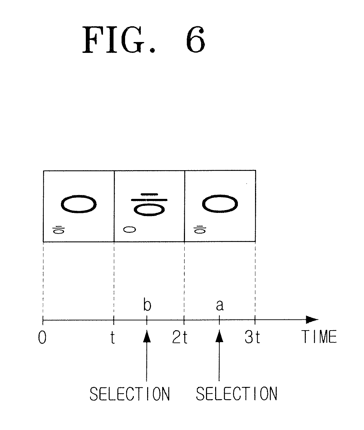

FIG. 6 is a view explaining a process of inputting Korean language characters using a screen keyboard as shown in FIG. 4A.

Referring to FIGS. 4A and 6, if the display of the screen keyboard is requested, the UI generation unit 375 generates the screen keyboard shown in FIG. 4A.

A cursor is displayed on a center button which can minimize the movement of the cursor, such as on a button on which " 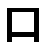 " and " 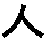 " or " 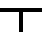 " and " 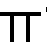 " are displayed. However, the initial position of the cursor can be changed by a designer or a user.

To input the target character " 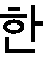 ", the user moves the cursor to the character button on which " 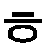 " is displayed by manipulating a direction key of the user manipulation unit 310, and selects the target button on which " 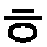 " is displayed.

The selected target button is displayed in an activated state by the UI generation unit 375.

If the target button is first selected, the UI generation unit 375 generates the screen keyboard on which " 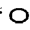 " is activated for the predetermined time period t from the time when the target button is first selected, and is displayed in a large font in the center of the target button, while " 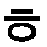 " is displayed in a small font on the target button. When the predetermined time period *t* elapses, the UI generation unit 375 generates the screen keyboard in which " 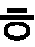 " is activated from time point *t* to time point 2*t* , and is displayed in a large font in the center of the target button, while "O" is displayed in a small font on the target button. Then, if the predetermined time *t* elapses, the UI generation unit 375 generates the screen keyboard in which " 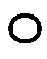 " is activated from time point 2*t* to time point 3*t*, and " 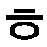 " is inactivated.

If a signal which selects the target character is received from the user manipulation unit 310 at time point "a" between 2*t* and 3*t* , the control unit 390 judges that the activated character, such as "O", is selected between 2*t* and 3*t* . Then, the control unit 390 controls the UI generation unit 375 and the display unit 365 to generate and display the screen keyboard on which the selected target character " 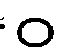 " is displayed in the character confirmation window W.

Second, the control unit 390 operates to alternately activate the at least two characters being displayed on the target button based on the time for which the user manipulation unit 310 selects the target button. In this case, the period for which each character is activated is predetermined, but is changeable.

Accordingly, the user re-selects the target button on which the target button desired by the user is positioned after the user first selects the same target button, and keeps the selection of the target button until the character desired by the user is activated. The user stops the selection of the target button when the desired button is activated, and the control unit 390 judges the currently activated character as the target character. Then, the control unit 390 controls the UI generation unit 375 and the display unit 365 to generate and display the screen keyboard on which the judged target character is displayed in the character confirmation window W.

For example, to input the target character " 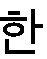 ", the user moves the cursor to the target button on which " 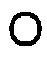 " and " 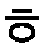 " are displayed by manipulating the direction key of the user manipulation unit 310. Then, the user re-selects the target button by pushing a confirmation key (not illustrated), and keeps pushing the confirmation key until " 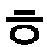 " is activated.

Referring to FIG. 6, for the first 2*t* after the user re-selects the target button, " 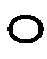 " is activated and displayed in a large font on the target button, while " 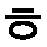 " is displayed in a small font on the target button. If the time for which the target button is being pushed exceeds 2*t* , " 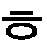 " is activated and is displayed in a large font on the target button until 3*t* elapses. In this case, the user selects " 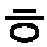 " by stopping pushing the confirmation key at time point "b" between 2*t* and 3*t* . Then, the control unit 390 judges the character being activated as the target character when the pushing of the confirmation key is stopped, and controls the UI generation unit 375 and the display unit 365 to generate and display the screen keyboard on which the target character " 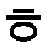 " is displayed in the character confirmation window W.

According to the target character input method as described above with reference to FIG. 6, the display device 300 makes a plurality of character buttons display a plurality of characters, and thus the number of character buttons provided in the screen keyboard is reduced. Also, the display device 300 makes the characters positioned on the selected target button be alternately activated when the target button is selected, or makes the characters be alternately activated according to the time for which the first selected target button is re-selected. Accordingly, the user can easily identify the target character by selecting a desired character when the character is activated, and can select the target character with the frequency of movement among character buttons minimized.

On the other hand, the display device 300 may make the target characters be inputted through a third method as follows, in addition to the above-described first and second methods.

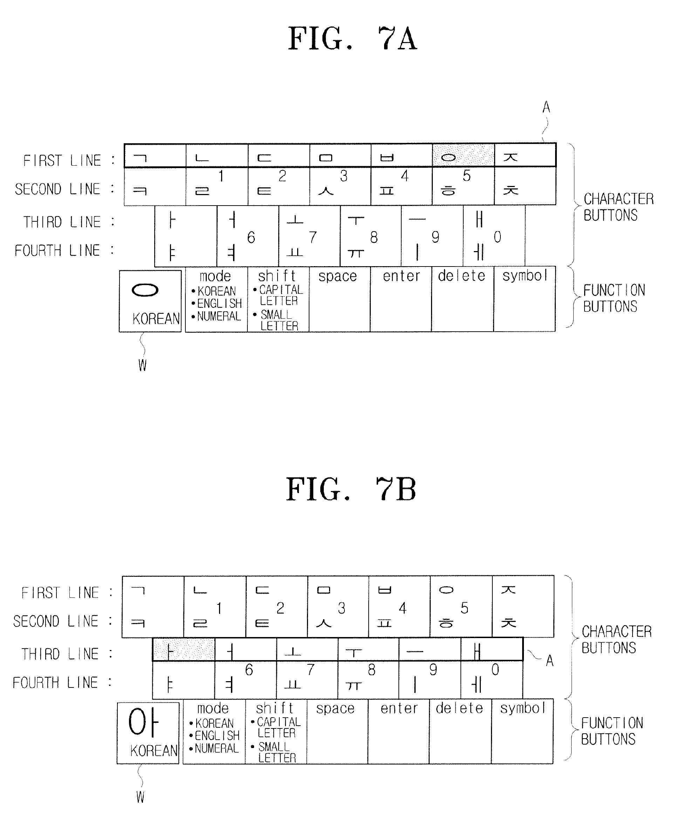

If the display of the screen keyboard is requested, the control unit 390 controls the UI generation unit 375 and the display unit 365 to generate and display the screen keyboard through which Korean language characters can be inputted, as shown in FIG. 7A. In this case, the control unit controls the UI generation unit 375 to generate the screen keyboard of which the first line of characters is activated, such as region A. This means that the user can select characters positioned on the first line among the plurality of character buttons.

To select a character positioned on the second line, the user can use the shift button. Whenever the shift button is selected as a button which selects the activated line on the screen keyboard as shown in FIG. 7A, the activated region is shifted.

That is, if the user selects the target character " 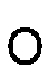 " after the first line is activated as shown in FIG. 7A, the UI generation unit 375 generates the screen keyboard on which " 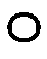 " is displayed in the character confirmation window W.

Then, if the user re-selects the shift button, the UI generation unit 375 generates the screen keyboard on which the activated region A is positioned in the third line as shown in FIG. 7B. If the user selects the target character "├" after the third line is activated, the UI generation unit 375 generates the screen keyboard on which " 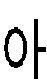 " is displayed in the character confirmation window W.

On the other hand, for an English language input mode, the shift button has a first function of selecting capital letters and small letters, and a second function as described with reference to FIGS. 7A and 7B. In this case, one of the first and second functions is set as a default, and the other function is performed when the shift button is selected over a predetermined time. For example, in order for the user to shift the capital alphabet to the small alphabet if the first function is set as a default, the user selects the shift button for a time shorter than a predetermined time, while the user selects the shift button over the predetermined time in order to use the second function.

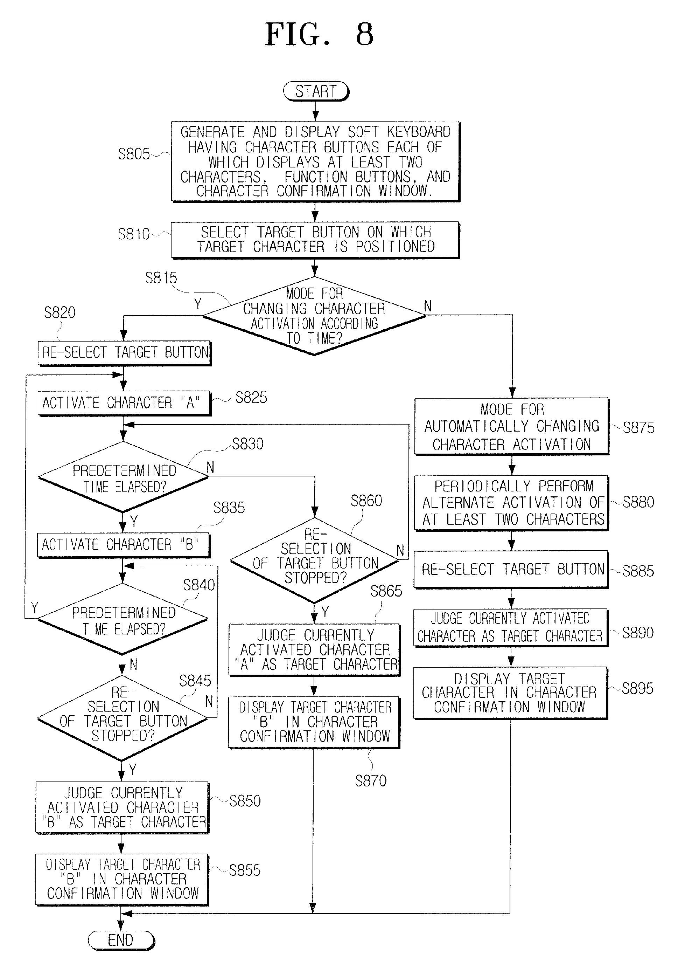

FIG. 8 is a flowchart illustrating a character input method using a soft keyboard as illustrated in FIG. 3.

Referring to FIGS. 3 to 8, if a signal for requesting the display of the soft keyboard is received through the user manipulation unit 310, the control unit controls the UI generation unit 375 and the display unit 365 to generate and display a soft keyboard as shown in FIG. 4A (S805). The soft keyboard displayed comprises a plurality of character buttons, each of which displays at least two characters, a plurality of function buttons, and a character confirmation window W.

If a user selects a target button after moving a cursor onto the target button on which the target character is positioned by manipulating the user manipulation unit 310 (S810), the control unit 390 confirms whether the activated mode currently set in the display device 300 is an automatic mode or a time difference mode (S815). Here, the automatic mode is a mode in which plural characters are automatically activated in an alternate manner when the target button is first selected. The time difference mode is a mode in which plural characters are alternately activated according to the time for which the user re-selects the target button. The currently set activated mode is stored in a register (not illustrated) of the control unit 390.

If the target button selected (S810) is re-selected (S820) after it is confirmed that the time difference mode is set (S815), the control unit controls the UI generation unit 375 to generate the screen keyboard on which the character set as a default among the characters positioned on the re-selected target button is activated (S825). Here, the user should keep the selection of the target button over the predetermined time *t*. For example, if "A" and "B" are positioned on the target button, the control unit 390 operates to activate "A" on the target button.

If the predetermined time t elapses (S830), the control unit 390 controls the UI generation unit 375 to generate the screen keyboard on which "B" is activated on the target button (S835).

Thereafter, if the predetermined time t elapses (S840), the control unit 390 again controls the UI generation unit 375 to generate the screen keyboard on which "A" is activated on the target button (S825).

By contrast, if the re-selection of the target button is stopped when the predetermined time *t* does not elapse after operation S835, such as if the user stops pushing the target button (S845), the control unit 390 judges the currently activated character "B" as the target character (S850).

Then, the control unit 390 controls the UI generation unit 375 and the display unit 365 to generate and display the screen keyboard on which the judged target character "B" is displayed in the character confirmation window W (S855).

By contrast, if the re-selection of the target button is stopped when the predetermined time t (S830) has not elapsed (S860), the control unit 390 judges the currently activated character "A" as the target button (S865). Then, the control unit 390 controls the UI generation unit 375 and the display unit 365 to generate and display the screen keyboard on which the judged target character "A" is displayed in the character confirmation window W (S870).

On the other hand, if it is confirmed that the current mode is not the time difference mode, the control unit 390 judges the current mode as the automatic mode, in which the activation of the character is automatically changed (S870). Then, the control unit 390 operates to periodically and alternately activate the characters positioned on the selected target button (S875). For example, if "A" and "B" are positioned on the selected target button, the control unit 390 controls the UI generation unit 375 to generate the screen keyboard on which "A" is activated for the predetermined time t, and then to generate the screen keyboard on which "B" is activated when the predetermined time t elapses.

If the target button selected (S810) is re-selected in operations S875 and S885, the control unit 390 judges the currently activated character as the target character (S890).

Then, the control unit 390 controls the UI generation unit 375 to generate the screen keyboard on which the target character judged (S890) is displayed in the character confirmation window W (S895).

In exemplary embodiments of the present invention, the screen keyboard is applied to a digital television (TV). However, this is merely exemplary, and the screen keyboard according to exemplary embodiments of the present invention can be applied to all devices that require a screen keyboard, including electronic home devices such as refrigerators and washing machines, mobile devices, and image forming devices such as printers.

The screen keyboard according to exemplary embodiments of the present invention is displayed on the display unit 365 as an image. However, it is also possible to arrange a physical keyboard having the same key arrangement as the screen keyboard shown in FIG. 4A in the remote controller 312. In this case, the remote controller 312 is provided with a display element such as an LCD to provide the character confirmation window W, and the user can easily input and confirm the character using a keyboard having a small number of character buttons arranged on the remote controller 312.

In exemplary embodiments of the present invention, the screen keyboard comprises 19 buttons and one character confirmation window. However, this is merely exemplary, and the number of buttons provided on the screen keyboard is not limited. Also, the size of the character confirmation window may be equal to or different from the size of the button.

It is preferable that the key arrangement on the screen keyboard is not limited to the arrangement illustrated in the drawings.

In addition, the characters inputted through the screen keyboard according to exemplary embodiments of the present invention are stored in the storage unit 380, and can be used whenever the user requires them. For example, if the display device 300 provides a recording of a moving image, the user can input the title of the moving image using the screen keyboard, and the input title can be stored in the storage unit 380. The stored title is provided to the display unit 365 as a list, and when the user selects a desired title, the control unit 390 operates to reproduce the moving image corresponding to the selected title.

The screen keyboard can be usefully applied to the display device 300 having a bidirectional communication function. For example, when the user desires information related to sports, he can request the transmission of the information related to baseball to a corresponding broadcasting station or an information providing server after he inputs the characters "professional baseball" using the screen keyboard.

As described above, according to exemplary embodiments of the present invention, it is possible to provide a screen keyboard having a small number of buttons in comparison to the hardware keyboard connected to the computer, and thus it becomes possible to reduce the manipulation frequency of buttons required for character input.

In addition, according to exemplary embodiments of the present invention, the size of the screen keyboard can be reduced by positioning a plurality of characters on each button, and thus the problem that the screen keyboard occupies a large area of the display screen can be solved.

In addition, according to exemplary embodiments of the present invention, by providing the character confirmation window on the screen keyboard, the user can easily confirm the characters inputted through the screen keyboard. Accordingly, the user can easily identify the target character by selecting a desired character when the character is activated.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A remote control device (100) using a soft keyboard, comprising:
a display unit (110) which displays the soft keyboard comprising a plurality of character buttons, each of which bears at least two characters;
a user manipulation unit (120) which selects a target button from the plurality of character buttons displayed on the display unit; and
a control unit (130) which causes a target character to be selectable by alternately activating the at least two characters positioned on the target button, if the target button is selected.

2. The remote control device of claim 1, wherein the soft keyboard further comprises a character confirmation window which displays an input state of characters inputted through the plurality of character buttons;
wherein if the target character is selected through the user manipulation unit (120), the control unit (130) displays the selected target character in the character confirmation window.

3. The remote control device of claim 1 or 2, wherein the control unit (130) alternately activates the at least two characters displayed on the target button if a time for which the target button is selected elapses.

4. The remote control device of claim 3, wherein the user manipulation unit (120) selects the target character by re-selecting the target button if the target character is activated.

5. The remote control device of any preceding claim, wherein the soft keyboard further comprises a mode button which selects one of a first mode for inputting a first language, a second mode for inputting a second language, and a numeral mode for inputting a numeral.

6. The remote control device of claim 5, wherein the first mode is a mode for inputting Korean language characters, the second mode is a mode for inputting English language characters, and the plurality of character buttons includes buttons which input Korean language characters, English language characters, and numerals.

7. The remote control device of claim 6, wherein the soft keyboard further comprises a toggle button which displays one of a capital letter and a small letter on each character button if the second mode is selected by the mode button.

8. The remote control device of any preceding claim, wherein the soft keyboard further comprises symbol buttons which input a plurality of special characters;
wherein if one of the symbol buttons is selected, the control unit displays corresponding ones of the plurality of special characters as a popup menu or on the soft keyboard.

9. A character input method using a soft keyboard, comprising:
displaying (S210) the soft keyboard comprising a plurality of character buttons, each of which bears at least two characters;
selecting (S220) a target button bearing a desired target character from the plurality of character buttons being displayed; and
making the desired target character selectable by alternately activating the at least two characters.

10. The method of claim 9, wherein the soft keyboard further comprises a character confirmation window which displays an input state of the characters inputted through the plurality of character buttons;
and the character input method further comprises displaying (S250)the selected target character in the character confirmation window.

11. The method of claim 9 or 10, wherein the character input method further comprises alternately activating (S230) the at least two characters displayed on the target button based on a time for which the target button is selected.

12. The method of any of claims 9 -11, wherein the soft keyboard further comprises a mode button which selects one of a first mode for inputting a first language, a second mode for inputting a second language, and a numeral mode for inputting a numeral.

13. The method of claim 12, wherein the first mode is a mode for inputting Korean language characters, the second mode is a mode for inputting English language characters, and the plurality of character buttons includes buttons for inputting Korean language characters, English language characters, and numerals.

14. The method of claim 13, wherein the soft keyboard further comprises a toggle button which displays one of a capital letter and a small letter on the character button if the second mode is selected by the mode button.

15. The method of any of claims 9-14, wherein the target button and the target character are selected by at least one of a touchpad (316), a mouse, (314) and a remote control device (312).

16. A display device using a soft keyboard, comprising:
a user interface (UI) generation unit (375) which generates the soft keyboard comprising a plurality of character buttons, each of which displays at least two characters to input the characters;
a signal processing unit (360) which processes a video signal outputted from a signal source or the soft keyboard;
a display unit (365) which displays the video signal outputted from the signal processing unit or the soft keyboard;
a signal receiving unit (315) which receives a signal which selects a target button from the plurality of character buttons of the soft keyboard displayed on the display unit; and
a control unit (390) which causes a target character to be selectable by alternately activating the at least two characters positioned on the target button if the signal which selects the target button is received through the signal receiving unit.

17. The display device of claim 16, wherein the signal receiving unit (315) receives the signal from at least one of a remote control device (312), a main body key input pad, a touchpad (316), and a mouse (314).

18. The display device of claim 16 or 17, wherein the soft keyboard further comprises a character confirmation window which displays an input state of characters inputted through the plurality of character buttons;
wherein if the target character is selected through the user manipulation unit (120), the control unit displays the selected target character in the character confirmation window.

19. The display device of any of claims 16-18, wherein the control unit (390) alternately activates the at least two characters displayed on the target button if a time for which the target button is selected elapses.

20. The display device of claim 19 or 20, wherein the user manipulation unit (120) selects the target character by re-selecting the target button if the target character is activated.

21. The display device of any of claims 16-20, wherein the soft keyboard further comprises a mode button which selects one of a first mode for inputting a first language, a second mode for inputting a second language, and a numeral mode for inputting a numeral.

22. The display device of claim 21, wherein the first mode is a mode for inputting Korean language characters, the second mode is a mode for inputting English language characters, and the plurality of character buttons includes buttons for inputting Korean language characters, English language characters, and numerals.

23. The display device of claim 22, wherein the soft keyboard further comprises a toggle button which displays one of a capital letter and a small letter on the character button if the second mode is selected by the mode button.

24. The display device of any of claims 16-23, wherein the soft keyboard further comprises symbol buttons which input a plurality of special characters;
wherein if one of the symbol buttons is selected, the control unit displays corresponding ones of the plurality of special characters as a popup menu or on the soft keyboard.
